# EUROPEAN PATENT APPLICATION

(11) **EP 4 249 850 A1**
(43) Date of publication of application: **27.09.2023**
(21) Application number: 22163419.9
(22) Date of filing: 22.03.2022
(51) Int. Cl.: G01B 21/00

(54) **CONTROLLER FOR AN IMAGING SYSTEM, SYSTEM AND CORRESPONDING METHOD**

(71) Applicant: Leica Instruments (Singapore) Pte. Ltd., 608924 Singapore (SG)
(72) Inventor: THEMELIS, George, 88131 Lindau (DE)
(74) Representative: DehnsGermany Partnerschaft von Patentanwälten

(57) **Abstract**

The invention essentially relates to a controller (150) for an imaging system (102), which is configured to acquire images (120) of a first type of an object, and to automatedly set one or more imaging parameters (140, 142, 144), wherein said controller (150) is configured to: determine a region of interest (130) at said object (114), based on an image (122) of a second type, wherein said second type is different from said first type; control said imaging system (102) to automatedly set said one or at least one of said more imaging parameters (140, 142, 144), based on said region of interest (130); and control said imaging system (102) to acquire an image (120) of said first type of said object (114). The invention also relates to a system (170) comprising such controller (150) and to a method.

## Description

### Technical Field

The present invention essentially relates to controller for an imaging system, which is configured to acquire images of an object, a system with such an imaging system, and to a method for controlling an imaging system.

### Background

In surgical microscopy, for example, or in other field of applications, images of an object like a sample or tissue can be imaged and presented on a display, for example, in real-time. In order to focus onto said object, focus can be adjusted automatedly (autofocus). Also, other imaging parameters might be set automatedly. Depending on the object to be imaged and on the type of imaging, however, it might be difficult to automatedly focus onto the desired region of said object or to set an imaging parameter for the desired region.

### Summary

In view of the situation described above, there is a need for improvement in automatedly setting imaging parameters. According to embodiments of the invention, a controller for an imaging system, a system and a method for controlling an imaging system with the features of the independent claims are proposed. Advantageous further developments form the subject matter of the dependent claims and of the subsequent description.

An embodiment of the invention relates to a controller for an imaging system, which is configured to acquire images of a first type of an object, and to automatedly set one or more imaging parameters. Said controller is configured to: determine a region of interest at said object, based on an image of a second type, wherein said second type is different from said first type. It is noted that said first type of image is the type of image, which shall (at least) be acquired by the imaging system. Further, said controller is configured to control said imaging system to automatedly set said one or at least one of said more imaging parameters, based on said region of interest. For example, the imaging system might be controlled to automatedly focus onto said region of interest Depending on the way of how the image of said second is acquired or received, it might be useful to have the same field of view for the images of the first type and of the second type. Further, said controller is configured to control said imaging system to acquire an image of said first type of said object, i.e., with the imaging parameters set before.

Autofocussing or setting a focus automatedly can be based on an image acquired by the imaging system. Based on a specific region within said image or the entire image, several images with different focus settings can be acquired. By means of image processing or image analysis, the one out of the several images with the sharpest edges of the specific region, for example, can be chosen. The corresponding focus parameters can then be set.

Such autofocus function typically has a predefined region in such image, which is used as the focus reference; for example, a region in the middle of the image can be used. It has turned out that a user's area or region of interest often is not within or even completely different from this autofocus area. This can result in that the imaging system focusses on areas other than the user-intended one.

When such region of interest is determined in another type of image (said image of second type) than which type the user is actually interested in (said image of first type), said region of interest can much easier be chosen to be the right or the desired one.

When said first type of image is or comprises a white light image, for example, automatedly finding a region of interest, which the user might be interested in, can be very difficult With said second type of image, which might be a fluorescence image, for example, this is much easier. In fluorescence images, typically only few regions or even only one region of are visible (with light emitted only from fluorophores, visible as bright patches, while the remaining parts of the image is dark or black). Such region typically is the one the user is interested in. This results in a much smarter autofocus or automatedly parameter setting functionality.

This allows automatedly setting an imaging parameter like focus in a smart and meaningful way. i.e. the autofocus, for example, will be able to follow a certain image feature, instead of a spatially fixed area of the image. In this regard it is noted that over time the region of interest might change from one to a next image of the second type.

According to a further embodiment of the invention, said one or more imaging parameters are chosen from the following: a focus (i.e., autofocus functionality), an exposure time, and an aperture. This allow different parameters be automatedly adapted for current needs.

According to a further embodiment of the invention, said image of said second type is, comprises or is based on at least one of the following: a fluorescence image, a reflectance image, and an image derived or calculated from one of those. In an embodiment, said image of said second type is, comprises or is based on an image derived or calculated from an image of said first type. In addition, many other types of images can be considered or used as said second type, as will be mentioned later. Depending on the specific second type to be chosen, this allows easily finding the region of interest in the image of said second type, which is of particular interest for a specific application or user. Also, said image of said second type might be chosen differently for different applications. Deriving or calculating said image of said second type from a specific type of image might be performed by means of image processing and/or analysis. A particular easy way is, thus, using an image derived or calculated from an image of said first type, as said image of said second type.

According to a further embodiment of the invention, said controller is configured to determine said region of interest at said object, based on said image of a second type, by: providing different weights to different regions of said image of said second type; and selecting said region of interest from said different regions based on said weights. This allows finding an appropriate region of interest very easily. For example, parts of more interest, e.g., having higher intensity, might be provided with higher weights. Then, the region of interest can be chosen to comprise the regions with weights above a specific threshold, for example.

According to a further embodiment of the invention, said image of said second type is, comprises or is based on at least a fluorescence image. Then, said weights are provided based on a fluorescence intensity in said image of said second type. Areas with high fluorescence intensity could be more important for focus than areas of low fluorescence intensity, for example.

According to a further embodiment of the invention, said image of said second type is, comprises or is based on at least a reflectance image. Then, said weights are provided based on a reflectance intensity in said image of said second type. Areas with specular reflections could be excluded from the region of interest in order to avoid "destruction" of the sharpness optimization algorithm that the auto focus typically uses, for example.

According to a further embodiment of the invention, said controller is configured to cause said imaging system to automatedly set said one or at least one of said more imaging parameters, further based on said image or several images of said first type. For example, this might comprise acquiring several images with different focus, choosing the focus for the image with sharp edges. This is an easy way for setting the exposure time, for example, because the first type image, which might be of particular interest, has a specific illumination in only the region of interest. Thus, while the region of interest is found based on the second type image, the parameter can be set based on the first type of image.

According to a further embodiment of the invention, said controller is configured to cause said imaging system to automatedly set said one or at least one of said more imaging parameters, further based on said image or several images of said second type. This is an easy way for setting the focus, for example, because the second type image might be acquired from the same object as the first type image will be. Then, the best focus will be the same for both types of images.

According to a further embodiment of the invention, said imaging system is further configured to acquire images of said second type of said object The controller then might receive said image of said second type from said imaging system. In this way, a typical imaging system for two types of images can be used.

According to another embodiment of the invention, said controller s configured to receive said image of said second type from an external entity, which is different from said imaging system. Thus external entity can be, for example, a database or an MRI (Magnetic Resonance Imaging) system or similar. This enhances the possibilities to choose images of said second type. Also, images from such MRI system or similar might, after acquisition, be stored in such database

A further embodiment of the invention relates to a system comprising an imaging system, which is configured to acquire images of a first type of an object, and to automatedly set one or more imaging parameters. Said system also comprises said controller in one of the embodiments mentioned above.

According to a further embodiment of the invention, said imaging system is further configured to acquire images of a second type of an object, comprising imaging optics, a first imaging detector for acquiring said images of said first type, and a second imaging detector for acquiring said images of said second type.

According to a further embodiment of the invention, said system comprises a microscope, for example, a surgical microscope. Such microscope comprises or is configured as (or is) said imaging system.

A further embodiment of the invention relates a method for controlling an imaging system, which is configured to acquire images of a first type of an object, and to automatedly set one or more imaging parameters. Said method comprises determining a region of interest at said object, based on an image of a second type, wherein said second type is different from said first type; controlling said imaging system to automatedly set said one or at least one of said more imaging parameters, based on said region of interest; and controlling said imaging system to acquire an image of said first type of said object

With respect to advantages and further embodiments of the imaging system, the microscope and the method, it is referred to the remarks of the controller, which apply here correspondingly.

A further embodiment of the invention relates to a computer program with a program code for performing the method of above, when the computer program is run on a processor.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

### Short description of the Figures

- Fig. 1: schematically shows a system with a microscope and a controller according to an embodiment of the invention;
- Fig. 2: schematically shows a method according to a further embodiment of the invention.

### Detailed Description

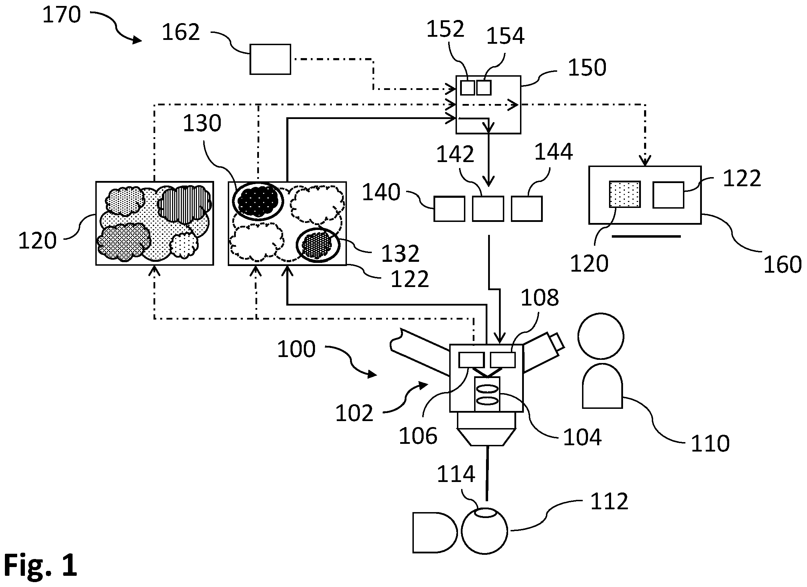

Fig. 1 schematically illustrates a system 170, comprising a microscope 100, by means of example, a surgical microscope, and a controller 150 according to an embodiment of the invention. Said microscope comprises or is an imaging system 102, and said controller 150 can comprise one or more processors 152 and/or one or more storage devices 154.

Said imaging system 102 is, for example, configured to acquire images 120 of a first type of an object 114. For example, said imaging system 120 can comprise imaging optics 104, and a first imaging detector 106 for acquiring said images 120 of said first type. In an embodiment, said images 120 of said first type are white light images, i.e., images showing said object 114 in all visible colours, as illustrated in Fig. 1 by different shadings for different parts or regions of said object 114.

Further said imaging system 102 is, in an embodiment, configured to acquire images 122 of a second type of said object 114. For example, said imaging system 120 can comprise a second imaging detector 108 for acquiring said images 122 of said second type. Said imaging optics (or illumination and imaging optics) 104, which might comprise different lenses, illumination and the like, might also be used for acquiring said images 122 of said second type.

In an embodiment, said images 122 of said second type are fluorescence images. In order to receive or acquire such fluorescence images, fluorophores like 5-ALA (5-aminolevulinic acid) can be given to the patient 112; said fluorophores will cause specific sections of tissue like tumour to emit fluorescence light in a certain colour (typically, in pinkish colour), when illuminated with appropriate excitation light. Such fluorescence image, thus, typically only shows specific regions of said object 114 in bright light with specific colour, while the reaming parts are dark. This is illustrated in Fig. 1 by a dark shading for two such regions, indicated 130, 132, while the remaining parts are of no colour or shading (note that this for illustration purposes only).

Further, said imaging system 102 is configured to automatedly set one or more imaging parameters, for example focus 140, exposure time 142 and aperture 144. Setting focus automatedly, for example, can be performed by acquiring several images which different focus values, analysing these images for the sharpest edges, for example, and choosing the value of focus corresponding to this image with sharpest edges. Setting exposure time automatedly, for example, can be performed by analysing the illumination intensity of a certain region (or the entire image) and set the value for the exposure time such that an illumination intensity integrated over said exposure time value will result in a specific value. Setting aperture automatedly, for example, can be performed by varying the value of the aperture, analysing the overall illumination intensity reaching the detector, for example, and choosing an aperture value resulting in desired illumination intensity reaching the detector.

By means of example, microscope 100 comprises said imaging system 102, such that a user 110 like a surgeon can view or examine said object 114, which might be a head of a patient 112. Such automated setting can be initiated or caused by said controller 150.

Said controller 150 for said imaging system 102 is configured to determine a region of interest 130 at said object 114, based on an image 122 of a second type. As mentioned above, the imaging system 102 might be able to acquire such image 122 of said second type (fluorescence image), thus, the controller 150 can cause said imaging system 102 to acquire it As mentioned, such image 122 of said second type might (alternatively) also be received at said controller 150 from an external entity 162 or it might also be derived or calculated from an image of said fist type. Then, the controller 150 would have to cause the imaging system 102 to acquire an image of said first type, receive it and calculate said image of said second type.

In the example illustrated in Fig. 1, said controller 150 causes imaging system 102 to acquire an image 122 of said second type, which is illustrated by means of a solid line. It is noted that an image of said first type might be acquired simultaneously, depending on the configuration of the controller and/or the imaging system; in such case, said image of said first type does not need to be considered at this stage. In case said image of said second type would be derived from said image of said first type, said controller 150 could cause imaging system 102 to acquire an image of said first type, which might then be processed.

Determining said region of interest 130 in said fluorescence image 122 (image of said second type) can be performed, in an embodiment, by providing different weights to different regions of said fluorescence image 122. For example, the higher the intensity in a region (this might be a single pixel or a certain number of neighboured pixels, for example) is, the higher such weight can be. By means of example, a region 130 and a region 132 in fluorescence image 122 shall exhibit certain measurable intensity; region 130 has a higher intensity than region 132, which is illustrated by a darker shading. Thus, region 130 (or several sub-regions like pixels thereof) can be provided with a higher weightthan region 132. Then said region 130 is selected as said region of interest based on said weights; for example, only weights having a value above a certain threshold might be used for said region of interest.

Depending on the second type of images, typically, only few regions within said image, which might be of interest, are present. In a fluorescence image as mentioned above, typically, only regions with tumour are present, i.e., exhibit an intensity of at least some magnitude. This is in particular true compared to an image 120 of said first type as also illustrated in Fig. 1. In image 120 a region of interest 130 could not easily or not at all be automatedly be chosen; note that such region of interest should have to be of interest for the user 110 like the surgeon.

If said image of said second type was, for example, a reflectance image, such weights might be provided based on the reflectance intensity. For example, the higher the reflectance, the lower the weight This would result, for example, in choosing a region of interest that has low reflectance intensity.

As mentioned above, many other types of images could be used for said image of said second type. According to an embodiment, said image of said second type is, comprises or is based on at least one of the following:
- a fluorescence image,
- an image derived or calculated from a fluorescence image,
- a reflectance image,
- an image derived or calculated from a reflectance image,
- a spectroscopy image, preferably comprising at least one of: multispectral, hyperspectral images,
- an image derived or calculated from such a spectroscopy image,
- a Raman image,
- an image derived or calculated from a Raman image,
- a laser specie image,
- an image derived or calculated from a laser specle image,
- a confocal image,
- an image derived or calculated from a confocal image,
- an optical properties image, in particular µₐ (adsorption coefficient) and/or µₛ (scattering coefficient),
- an image derived or calculated from an optical properties image,
- an ultrasound image,
- an image derived or calculated from an ultrasound image,
- a photoacoustic image,
- an image derived or calculated from a photoacoustic image,
- a 3D surface scan image,
- an image derived or calculated from a 3D surface scan,
- a kinetics mapping image, for example ICG bolus kinetics,
- an image derived or calculated from a kinetics mapping image,
- a functional image captured with any modality with at least one of: pre-operatively, intraoperatively, in real-time,
- an image derived or calculated from such functional image,
- an anatomical estimation image derived from comparison of tissue imaging in combination with anatomical data bases, which, for example, show where anatomical and/or functional tissue areas are,
- an image derived or calculated from such anatomical estimation image,
- an image derived or calculated from an image of said first type.

Depending on the specific needs and/or configurations of an imaging system or microscope available, a suitable second type might be chosen.

Further, said controller 150 controls said imaging system 102 to automatedly set said one or at least one of said more imaging parameters 140, 142, 144 mentioned above, based on said region of interest 130. Depending on the imaging parameter and/or the configuration of the imaging system 102, this might be performed based on an image of said first type and/or of said second type.

Setting the focus automatedly, for example, might be performed on images of said first type as well as on images of said second type. For the example illustrated in Fig. 1, both types of images are acquired with the same imaging optics 104 from the same object 114. Thus, the focus will be the same for both types of images. In case the image of said second type was received from an external entity, for example, setting the focus might be performed on images of said first type. It should be taken care in such case, that the field of views of both types of images are equivalent.

Besides focus, also exposure time might be set different depending on the region of interest. If the region of interest is of low intensity, while the remaining parts of the object or image are of high intensity, a typical way of setting the exposure time would depend on a mean value over the entire image. With using the specific region of interest, found in the image of said second type, the exposure time might be set longer and, thus, the region of interest will appear better illuminated in the final image, which is of the first type. It is noted that the region of interest is determined based on the image of said second type, the exposure time (as well as any other mentioned imaging parameter) can be set based on the image of said first type. This is similar for the aperture, which might be chosen low or high, for example.

Setting the exposure automatedly, for example, might advantageously be performed on images of said first type, because the illumination and intensity situation, typically, is different in both types of images. While in the fluorescence image, the region of interest exhibits high intensity, in the corresponding white light image the illumination intensity in this region of interest might be low.

After having set the imaging parameters, said controller 150 controls said imaging system 102 to acquire an image 120 of said first type of said object 114. In addition, said controller 150 can control said imaging system 102 to acquire an image 122 of said second type of said object 114 simultaneously, as illustrated in the example of Fig. 1. Acquiring these two types of images is illustrated by means of a dashed line. Both images 120, 122 might then be displayed on a display 160 such that user 110 can view them. Said display 160 is, in an embodiment, comprised by said system 170.

It is noted that acquiring both types of images can be performed repeatedly, such that user 110 can view said object 114 on display 160 with both view, white light and fluorescence, for example, simultaneously and in real-time. Also, determining said region of interest in said image of said second type might be performed repeatedly, such that user 110 can view said object 114 with focus on a region desired at the moment. For example, some tumour might have been determined as the region of interest due to high fluorescence intensity in the fluorescence image. When this tumour has been resected, another tumour, which has lower fluorescence intensity in the fluorescence image might then be determined as the region of interest (because this might then be the region with highest intensity).

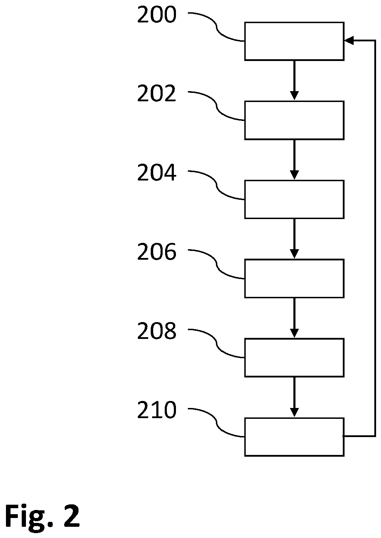

Fig. 2 schematically illustrates a method according to an embodiment of the invention by means of a flow diagram. In step 200, an image of a second type of an object, for example, a fluorescence image, can be acquired by causing an imaging system to do so. Alternatively, such image of said second type might be received from externally or determined in another way, as mentioned above.

In step 202, different weights can be provided or assigned to different regions of said image of said second type, like mentioned above for regions 130, 132 in Fig. 1. In step 204, a region of interest can be selected from said different regions based on said weights.

Thus, in step 206, said region of interest at said object is determined, based on said image of said second type. Further, in step 208, an imaging system is controlled to automatedly set one or more imaging parameters like focus, exposure time and aperture, based on said region of interest. In step 210, said imaging system is controlled to acquire an image of said first type of said object; also, said imaging system can be controlled to acquire an image of said second type of said object simultaneously. These steps may be repeated in order to provide, for example, properly focussed images in real-time to a user like a surgeon.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to a microscope comprising a system as described in connection with one or more of the Figs. 1 to 2. Alternatively, a microscope may be part of or connected to a system as described in connection with one or more of the Figs. 1 to 2. Fig. 1 shows a schematic illustration of a system 170 configured to perform a method described herein. The system 170 comprises a microscope 110 and a computer system or controller 150. The microscope 110 is configured to take images and is connected to the computer system 150. The computer system 150 is configured to execute at least a part of a method described herein. The computer system 150 may be configured to execute a machine learning algorithm. The computer system 150 and microscope 110 may be separate entities but can also be integrated together in one common housing. The computer system 150 may be part of a central processing system of the microscope 110 and/or the computer system 150 may be part of a subcomponent of the microscope 110, such as a sensor, an actor, a camera or an illumination unit, etc. of the microscope 110.

The computer system 150 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 150 may comprise any circuit or combination of circuits. In one embodiment, the computer system 150 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 150 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 150 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 150 may also include a display device, one or more speakers, and a keyboard and/or controller, which can include a mouse, trackball, touch screen, voice-recognition device, or any other device that permits a system user to input information into and receive information from the computer system 150.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### List of Reference Signs

- 100: microscope
- 102: imaging system
- 104: imaging optics
- 106: first imaging detector
- 108: second imaging detector
- 110: user
- 112: patient
- 114: object
- 120: image of first type
- 122: image of second type
- 130: region of interest
- 132: region
- 140,142,144: imaging parameter
- 150: controller
- 152: processor
- 154: storage device
- 160: display
- 162: external entity
- 170: system

- 200-210: method steps

## Claims

1. A controller (150) for an imaging system (102), which is configured to acquire images (120) of a first type of an object, and to automatedly set one or more imaging parameters (140, 142, 144), wherein said controller (150) is configured to:
Determine a region of interest (130) at said object (114), based on an image (122) of a second type, wherein said second type is different from said first type;
Control said imaging system (102) to automatedly set said one or at least one of said more imaging parameters (140, 142, 144), based on said region of interest (130); and
Control said imaging system (102) to acquire an image (120) of said first type of said object (114).

2. The controller (150) of claim 1, wherein said one or more imaging parameters are chosen from the following:
- a focus (140),
- an exposure time (142),
- an aperture (144).

3. The controller (150) of claim 1 or 2, wherein said image (120) of said first type is or comprises a white light image.

4. The controller (150) of any one of the preceding claims, wherein said image (122) of said second type is, comprises or is based on at least one of:
- a fluorescence image,
- an image derived or calculated from a fluorescence image,
- a reflectance image,
- an image derived or calculated from a reflectance image.

5. The controller (150) of any one of the preceding claims, configured to determine said region of interest (130) at said object (114), based on said image (122) of a second type, by:
Providing different weights to different regions (130, 132) of said image (122) of said second type; and
Selecting said region of interest (130) from said different regions based on said weights.

6. The controller (150) of claims 4 and 5, wherein said image (122) of said second type is, comprises or is based on at least a fluorescence image, and
wherein said weights are provided based on a fluorescence intensity in said image (122) of said second type.

7. The controller (150) of claims 4 and 5 or of claim 6, wherein said image (122) of said second type is, comprises or is based on at least a reflectance image, and
wherein said weights are provided based on a reflectance intensity in said image (122) of said second type.

8. The controller (150) of any one of the preceding claims, configured to cause said imaging system (102) to automatedly set said one or at least one of said more imaging parameters (140, 142, 144), further based on said image (120) or several images of said first type.

9. The controller (150) of any one of the preceding claims, configured to cause said imaging system (102) to automatedly set said one or at least one of said more imaging parameters (140, 142, 144), further based on said image (122) or several images of said second type.

10. The controller (150) of any one of the preceding claims, wherein said imaging system (102) is further configured to acquire images (122) of said second type of said object (114).

11. The controller (150) of claim 10, further configured to: Receive said image (122) of said second type from said imaging system (102).

12. The controller (150) of any one of claims 1 to 9, further configured to:
Receive said image (122) of said second type from an external entity (162), which is different from said imaging system (102).

13. A system (170) comprising an imaging system (102), configured to acquire images (120) of a first type of an object (114), and to automatedly set one or more imaging parameters (140, 142, 144), said system (170) further comprising the controller (150) of any one of the preceding claims.

14. The system (170) of claim 13, wherein said imaging system (102) is further configured to acquire images (122) of a second type of an object (114), comprising imaging optics (104), a first imaging detector (106) for acquiring said images (120) of said first type, and a second imaging detector (108) for acquiring said images (122) of said second type.

15. The system (170) of claim 13 or 14, comprising a microscope (100), which comprises or is configured as said imaging system (102).

16. A method for controlling an imaging system (102), which is configured to acquire images (120) of a first type of an object (114), and to automatedly set one or more imaging parameters (140, 142, 144), comprising:
Determining (206) a region of interest (130) at said object (114), based on an image (122) of a second type, wherein said second type is different from said first type;
Controlling (208) said imaging system (102) to automatedly set said one or at least one of said more imaging parameters (140, 142, 144), based on said region of interest (130); and
Controlling (210) said imaging system (102) to acquire an image (120) of said first type of said object.

17. A computer program with a program code for performing the method of claim 16 when the computer program is run on one or more processors or the controller (150) of any one of claims 1 to 15.
